# EUROPÄISCHE PATENTSCHRIFT

(11) **EP 0 597 945 B1**
(45) Veröffentlichungstag und Bekanntmachung des Hinweises auf die Patenterteilung: **19.04.1995**
(21) Anmeldenummer: 92916590.0
(22) Anmeldetag: 31.07.1992
(51) Int. Cl.: B62D 5/08

(54) **HILFSKRAFTLENKUNG**
SERVO-ASSISTED STEERING SYSTEM
DIRECTION ASSISTEE

(30) Priorität: 06.08.1991 DE 4126020
(43) Veröffentlichungstag der Anmeldung: 25.05.1994
(73) Patentinhaber: ZF FRIEDRICHSHAFEN Aktiengesellschaft, 88038 Friedrichshafen (DE)
(72) Erfinder: LANG, Armin, D-7070 Schwäbisch Gmünd (DE)
(86) Internationale Anmeldenummer: EP9201741
(87) Internationale Veröffentlichungsnummer: WO9302904

(56) Entgegenhaltungen:
- WO-A-85/01924
- US-A- 3 750 836

## Beschreibung

Die Erfindung betrifft eine Hilfskraftlenkung, insbesondere für Kraftfahrzeuge, nach dem Oberbegriff des Anspruchs 1. Die Hilfskraftlenkung enthält ein Lenkventil, das zwei Einlaß-Sitzventile und zwei Auslaß-Sitzventile aufweist, deren Schließkörper durch eine Drehbewegung einer Lenkspindel in axialer Richtung verschiebbar sind. Die Schließkörper der Einlaß-Sitzventile sind durch die Kraft von Schließfedern in Schließrichtung beaufschlagbar.

Eine derartige Hilfskraftlenkung ist als Zahnstangen-Hilfskraftlenkung aus der EP-B1-01 92 641 bekannt. Zur Vermeidung von Leckverlusten an den Einlaß-Sitzventilen sind deren Schließfedern verhältnismäßig stark ausgeführt. Zum Öffnen der Einlaß-Sitzventile einerseits und der Auslaß-Sitzventile andererseits ergeben sich unterschiedliche Betätigungskräfte. Beim Einleiten der Lenkbewegung ist für den Aufbau des Druckes zunächst ein relativ hohes Betätigungsmoment am Lenkhandrad erforderlich, da sowohl die Kraft der Schließfeder als auch die Kraft der Zentrierfeder überwunden werden muß. Für den Abbau des Druckes im Servomotor ist dagegen nur die Kraft der Zentrierfeder maßgebend. Dadurch ist eine stetige Regelung des Druckes erschwert, da die Betätigungskraft stets zwischen Ein- und Ausschaltkraft hin und her pendelt und es entsteht beim Fahrer das Gefühl einer hakenden Lenkung.

Das Lenkventil ist zwar aus einer Zahnstangen-Hilfskraftlenkung bekannt. Mit gleicher Wirkung kann ein solches Lenkventil in anderen Hilfskraftlenkungen verwendet werden, beispielsweise in einer Kugelmutter-Hilfskraftlenkung.

Der Erfindung liegt die Aufgabe zugrunde, eine gattungsgemäße Hilfskraftlenkung derart zu verbessern, daß bei ihrer Betätigung eine Druck-Drehmoment-Kennlinie erzielt wird, die einen im wesentlichen stetigen Verlauf ohne nennenswerte Hysterese aufweist.

Diese Aufgabe wird durch die im Anspruch 1 gekennzeichnete Hilfskraftlenkung gelöst, indem auch zum Öffnen des Auslaß-Sitzventils die Schließfeder des Einlaß-Sitzventils wirksam ist. Die Lösung erfolgt insbesondere dadurch, daß die Schließfedern nur dann an den Schließkörpern der Einlaß-Sitzventile angreifen, wenn sich die zugehörigen Auslaß-Sitzventile in ihrer Neutralstellung befinden. Dabei hält jede Schließfeder in der Neutralstellung des Lenkventils den Schließkörper des zugehörigen Einlaß-Sitzventils über eine axial verschiebbare Scheibe in Anlage an einem gehäusefesten Ventilsitz. Außerdem ist das Lenkventil derart ausgelegt, daß bei seiner Verstellung aus der Neutralstellung jeweils eines der Auslaß-Sitzventile die Schließfeder des zugehörigen Einlaß-Sitzventils über die Scheibe von dem Schließkörper des Einlaß-Sitzventils abhebt.

Zweckmäßige und vorteilhafte Ausgestaltungen der Erfindung sind in dem Unteranspruch angegeben.

In einer vorteilhaften Ausgestaltungsform weist jedes Auslaß-Sitzventil einen axial verschiebbaren Schließkörper auf, der in Neutralstellung des Lenkventils mit einer Betätigungsfläche einen ersten Abstand zu der Scheibe hält und der mit einer Schließfläche einen zweiten Abstand zu einem an dem Schließkörper des Einlaß-Sitzventils angordneten Ventilsitz hält, wobei der zweite Abstand größer ist als der erste Abstand.

Die mit der erfindungsgemäßen Hilfskraftlenkung erreichten Vorteile bestehen insbesondere darin, daß die beiden Einlaß-Sitzventile nur in der Neutralstellung des Lenkventils durch die Kraft ihrer Schließfedern gegen den zugehörigen Ventilsitz gedrückt werden und damit hermetisch schließen. Sobald das Lenkventil verstellt wird, wird die Schließfeder des jeweils aufzusteuernden Einlaß-Sitzventils durch das zugehörige Auslaß-Sitzventil von dem Schließkörper des Einlaß-Sitzventils abgehoben. Das Einlaß-Sitzventil bleibt danach noch solange geschlossen, bis das zugehörige Auslaß-Sitzventil geschlossen hat. Dadurch kann sich der Schließkörper frei von Federkräften bewegen, so daß sich das Ventil entsprechend dem geforderten Druck frei einstellen kann. Das Betätigungsmoment, das den Kräften der jeweiligen Schließfeder und der Zentrierfeder entspricht, kann sich nicht mehr sprunghaft ändern.

Im folgenden wird die Erfindung anhand eines in der Zeichnung dargestellten Ausführungsbeispieles einer Zahnstangen-Hilfskraftlenkung näher erläutert. Die Erfindung ist jedoch auch für andere Hilfskraftlenkungen, beispielsweise Kugelmutter-Hilfskraftlenkungen, anwendbar.

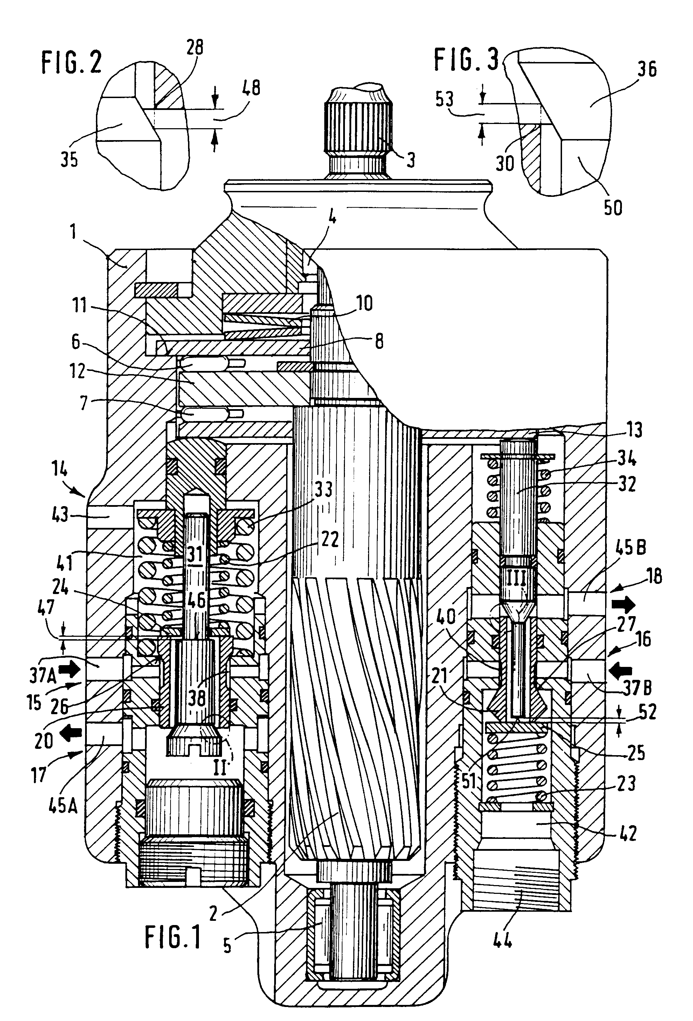

Figur 1 zeigt einen Längsschnitt durch die erfindungsgemäße Hilfskraftlenkung.

Figuren 2 und 3 zeigen jeweils ein Detail der Fig. 1.

In einem Lenkgehäuse 1 ist ein schräg- oder spiralverzahntes Ritzel 2 drehbar und in bestimmten Grenzen axial verschiebbar gelagert. Das Ritzel 2 trägt an seinem einen Ende einen Lenkspindelanschluß 3 für den Anschluß an ein Lenkorgan, beispielsweise ein nicht dargestelltes Lenkhandrad. Das Ritzel 2 steht über seine Schrägverzahnung in Eingriff mit einer nicht dargestellten Zahnstange, die in dem Lenkgehäuse 1 axial verschiebbar geführt ist.

Das Ritzel 2 ist durch zwei Radiallager 4 und 5 und durch zwei Axiallager 6 und 7 gelagert. Die axiale Fixierung erfolgt durch eine Lagerscheibe 8, die über eine erste Federanordnung 10 in der Form von Tellerfedern gegen eine Anlageschulter 11 in dem Lenkgehäuse 1 gedrückt wird. Das Axiallager 6 ist zwischen der Lagerscheibe 8 und einem mit dem Ritzel 2 verbundenen Zentrierbund 12 angeordnet. Auf der anderen Seite des Zentrierbundes 12 ist das Axiallager 7 angeordnet, das durch eine zweite (weiter unten näher beschriebene) Federanordnung über eine Betätigungsscheibe 13 gegen den Zentrierbund 12 gedrückt wird.

Zur Steuerung des von einer nicht dargestellten Servopumpe geförderten Druckmittels zu und von den Druckräumen eines nicht dargestellten Servomotors dient ein Lenkventil 14, das aus zwei Einlaß-Sitzventilen 15 und 16 und zwei Auslaß-Sitzventilen 17 und 18 gebildet ist. Die Einlaß- und Auslaß-Sitzventile 15, 16, 17, 18 sind im wesentlichen parallel zu dem Ritzel 2 angeordnet. Dabei sind jeweils ein Einlaß-Sitzventil 15 bzw. 16 und ein Auslaß-Sitzventil 17 bzw. 18 koaxial zueinander angeordnet.

In der Neutralstellung des Lenkventils 14 sind die Einlaß-Sitzventile 15 und 16 geschlossen. Dies wird dadurch erreicht, daß deren Schließkörper 20 und 21 durch Druckfedern 22 bzw. 23 über axial verschiebbare Scheiben 24 bzw. 25 gegen gehäusefeste Ventilsitze 26 bzw. 27 gedrückt werden.

In Bohrungen der Schließkörper 20 und 21 der Einlaß-Sitzventile 15 und 16 sind Ventilsitze 28 bzw. 30 für die Auslaß-Sitzventile 17 bzw. 18 gebildet. An zwei Ventilstößeln 31 und 32, die durch Druckfedern 33 und 34 gegen die Betätigungsscheibe 13 gedrückt werden, sind Schließkörper 35 bzw. 36 der Auslaß-Sitzventile 17 bzw. 18 ausgebildet. Die Ventilsitze 28 und 30 sind den Schließkörpern 35 und 36 derart zugeordnet, daß in der Neutralstellung des Lenkventils 14 die Auslaß-Sitzventile 17 und 18 geöffnet sind. Die Druckfeder 33 des Auslaß-Sitzventils 17 ist relativ stark ausgebildet, da diese Feder zum Öffnen des Einlaß-Sitzventils 15 erforderlich ist. Außerdem muß diese Feder in der Lage sein, den Schließkörper 20 über den Ventilstößel 31 in der Zeichnung nach oben zu schieben, auch dann, wenn die Ventile mit hydraulischer Rückwirkung arbeiten. Die Druckfeder 34 des Auslaß-Sitzventils 18 ist dagegen relativ schwach ausgebildet, da sie nur die Reibung einer am Ventilstößel 32 angeordneten Dichtung überwinden muß. Diese Feder ist für die eigentliche Funktion des Lenkventils nicht erforderlich und kann deshalb ganz entfallen.

Die Druckfeder 33 bildet, gegebenenfalls im Zusammenwirken mit der Druckfeder 34, die oben erwähnte zweite Federanordnung. Um in der Neutralstellung des Lenkventils 14 eine genaue und spielfreie Zentrierung des Ritzels 2 und damit der Betätigungsscheibe 13 zu erreichen, ist die Kraft der ersten Federanordnung 10 etwa doppelt so groß wie die Kraft der zweiten Federanordnung. Bei einer Verschiebung des Ritzels 2 in der Zeichnung nach oben wirkt dieser Bewegung die Kraft der ersten Federanordnung 10 entgegen, während die Kraft der zweiten Federanordnung die Bewegung unterstützt. Bei einer Verschiebung des Ritzels 2 nach unten wirkt nur die Kraft der zweiten Federanordnung dieser Bewegung entgegen. Damit sind in beiden Richtungen gleiche Kräfte wirksam.

Zur Versorgung der Lenkung mit von der Servopumpe gefördertem Druckmittel ist ein Zulaufanschluß vorgesehen, der in der Zeichnung zur Vereinfachung der Darstellung in zwei Zulaufanschlüsse 37A und 37B aufgeteilt ist. Die Zulaufanschlüsse 37A und 37B stehen über entsprechende Kanäle mit zwei Zulaufkammern 38 und 40 in Verbindung, die jeweils an einem der Einlaß-Sitzventile 15 bzw. 16 angeordnet sind. Zwei Kammern 41 und 42, die in Neutralstellung des Lenkventils 14 von den Zulaufkammern 38 und 40 getrennt sind, stehen mit zwei Zylinderanschlüssen 43 und 44 in Verbindung. Außerdem sind die Kammern 41 und 42 über entsprechende Durchbrüche in den Scheiben 24 und 25 und über die in Neutralstellung des Lenkventils offenen Auslaß-Sitzventile 17 und 18 mit einem Rücklaufanschluß 45A, 45B, und damit mit einem nicht dargestellten Druckmittelbehälter, verbunden.

An dem Ventilstößel 31 des Auslaß-Sitzventils 17 ist ein Absatz mit einer Betätigungsfläche 46 angeordnet, die in axialer Richtung einen ersten Abstand 47 von der Stirnfläche der Scheibe 24 hat. Der erste Abstand 47 ist in Neutralstellung des Lenkventils 14 größer als ein zweiter Abstand 48, der in axialer Richtung zwischen der Schließfläche des Schließkörpers 35 und dem Ventilsitz 28 besteht.

Der Ventilstößel 32 trägt einen axial gerichteten Fortsatz 50, dessen Stirnfläche als Betätigungsfläche 51 einen ersten Abstand 52 zu der Scheibe 25 aufweist. Der erste Abstand 52 ist in der Neutralstellung des Lenkventils 14 kleiner als ein zweiter Abstand 53, der zwischen der Schließfläche des Schließkörpers 36 und dem Ventilsitz 30 besteht.

In der Zeichnung sind die Einlaß- und Auslaß-Sitzventile 15 und 17 einerseits und die Einlaß- und Auslaß-Sitzventile 16 und 18 andererseits unterschiedlich ausgebildet. Die unterschiedlichen Ausführungsformen der Ventile sind erforderlich, damit alle Ventile, in axialer Richtung gesehen, auf einer Seite der Betätigungsscheibe 13 angeordnet sein können. Die beiden Teilventile können gleich ausgebildet sein, d. h. entweder der linken oder der rechten Ausführung in der Zeichnung entsprechend, wenn sie in axialer Richtung beidseitig der Betätigungsscheibe 13, z. B. koaxial, angeordnet sind.

Im folgenden wird die Funktion des Lenkventils 14 bei einer Betätigung der Zahnstangen-Hilfskraftlenkung näher beschrieben: In der Neutralstellung des Lenkventils sind die beiden Zulaufkammern 38 und 40 hermetisch abgeschlossen, so daß kein Druckmittel verbraucht wird. Die beiden Zylinderanschlüsse 43 und 44 sind in dieser Neutralstellung mit dem Rücklaufanschluß 45A, 45B verbunden, wodurch ein ungehinderter Rücklauf des Lenkgetriebes möglich ist.

Wird die Lenkspindel so gedreht, daß durch die Schrägverzahnung des Ritzels 2 eine Kraftkomponente auf das Ritzel nach oben hin entsteht, so bleibt diese Kraftkomponente solange unwirksam, bis die Kraft der ersten Federanordnung 10 überwunden ist. Nach Überwindung dieser Grenzkraft, bis zu der rein mechanisch gelenkt wird, verschiebt sich das Ritzel 2 nach oben. Durch die Kraft der Druckfedern 22, 33, 34 werden die Ventilstößel 31 und 32 ebenfalls nach oben verschoben und in ständiger Anlage an der Betätigungsscheibe 13 gehalten. Bei dieser Bewegung kommt zunächst die Betätigungsfläche 46 des Ventilstößels 31 zur Anlage an der Scheibe 24 und hebt über diese die Druckfeder 22 von dem Schließkörper 20 ab. Damit ist der Schließkörper 20 frei von Kräften der Druckfeder 22. Bei einer weiteren Verschiebung des Ventilstößels 31, nach Überwindung des zweiten Abstandes 48, kommt der Schließkörper 35 des Auslaß-Sitzventils 17 zur Anlage an dem Ventilsitz 28 und schließt damit das Auslaß-Sitzventil 17. Das Auslaß-Sitzventil 18 wird weiter geöffnet. Bei weiterer Bewegung des Ventilstößels 31 wird der Schließkörper 20 des Einlaß-Sitzventils 15 mitgenommen und das Einlaß-Sitzventil 14 wird geöffnet. Dadurch ergibt sich ein Druckmittelstrom von dem Zulaufanschluß 37A über die Zulaufkammer 38, das geöffnete Einlaß-Sitzventil 15 zu dem Zylinderanschluß 43. Der Zylinderanschluß 43 ist mit der einen Seite des Servomotors verbunden. Von der anderen Seite des Servomotors fließt das Druckmittel zurück zu dem zweiten Zylinderanschluß 44 und von dort über die Kammer 42 und das offene Auslaß-Sitzventil 18 zu dem Rücklaufanschluß 45B.

Bei einer Drehung des Ritzels 2 in der entgegengesetzten Richtung wird das Ritzel nach Überwinden der Grenzkraft der Druckfedern 22, 33, 34 nach unten verschoben. Während sich an dem linken Ventil das Auslaß-Sitzventil 17 weiter öffnet, kommt bei dem rechten Ventil zunächst die Betätigungsfläche 51 zur Anlage an der Scheibe 25, so daß diese die Druckfeder 23 von dem Schließkörper 21 des Einlaß-Sitzventils 16 abhebt. Damit ist der Schließkörper 21 frei von Federkräften. Bei weiterer Verschiebung, nachdem der zweite Abstand 53 überwunden ist, kommt der Schließkörper 36 des Auslaß-Sitzventils 18 zur Anlage an den Ventilsitz 30. Danach wird der Schließkörper 21 des Einlaß-Sitzventils 16 von dem Ventilsitz 27 abgehoben, so daß das Einlaß-Sitzventil 16 öffnet. Das Druckmittel strömt dann von dem Zulaufanschluß 37B über das geöffnete Einlaß-Sitzventil 16 und den Zylinderanschluß 44 zu der anderen Seite des Servomotors und von der einen Seite des Servomotors über den Zylinderanschluß 43 und das geöffnete Auslaß-Rückschlagventil 17 zum Rücklaufanschluß 45A.

Die Steuerung der Einlaß- und Auslaß-Sitzventile 15, 16, 17, 18 erfolgt im Ausführungsbeispiel über die Schrägverzahnung des Ritzels 2 durch dessen Axialverschiebung. Mit gleicher Wirkung kann die Verstellung der Ventile auch durch andere geeignete, an sich bekannte Mittel erfolgen, beispielsweise durch ein Steilgewinde oder durch eine Betätigungswippe.

### Bezugszeichen

- 1: Lenkgehäuse
- 2: Ritzel
- 3: Lenkspindelanschluß
- 4: Radiallager
- 5: Radiallager
- 6: Axiallager
- 7: Axiallager
- 8: Lagerscheibe
- 9: -
- 10: Federanordnung
- 11: Anlageschulter
- 12: Zentrierbund
- 13: Betätigungsscheibe
- 14: Lenkventil
- 15: Einlaß-Sitzventil
- 16: Einlaß-Sitzventil
- 17: Auslaß-Sitzventil
- 18: Auslaß-Sitzventil
- 19: -
- 20: Schließkörper
- 21: Schließkörper
- 22: Druckfeder
- 23: Druckfeder
- 24: Scheibe
- 25: Scheibe
- 26: Ventilsitz
- 27: Ventilsitz
- 28: Ventilsitz
- 29: -
- 30: Ventilsitz
- 31: Ventilstößel
- 32: Ventilstößel
- 33: Druckfeder
- 34: Druckfeder
- 35: Schließkörper
- 36: Schließkörper
- 37A: Zulaufanschluß
- 37B: Zulaufanschluß
- 38: Zulaufkammer
- 39: -
- 40: Zulaufkammer
- 41: Kammer
- 42: Kammer
- 43: Zylinderanschluß
- 44: Zylinderanschluß
- 45A: Rücklaufanschluß
- 45B: Rücklaufanschluß
- 46: Betätigungsfläche
- 47: Erster Abstand
- 48: Zweiter Abstand
- 49: -
- 50: Fortsatz
- 51: Betätigungsfläche
- 52: Erster Abstand
- 53: Zweiter Abstand

## Patentansprüche

1. Hilfskraftlenkung, insbesondere für Kraftfahrzeuge, mit einem Lenkventil (14), das zwei Einlaß-Sitzventile (15, 16) und zwei Auslaß-Sitzventile (17, 18) aufweist, deren Schließkörper (20, 21, 35, 36) durch eine Drehbewegung einer Lenkspindel in axialer Richtung verschiebbar sind, wobei die Schließkörper (20, 21) der Einlaß-Sitzventile (15, 16) durch die Kraft von Druckfedern (22, 23) in Schließrichtung beaufschlagbar sind, dadurch **gekennzeichnet,**
- daß die Druckfedern (22, 23) nur dann an den Schließkörpern (20, 21) der Einlaß-Sitzventile (15, 16) angreifen, wenn sich die zugehörigen Auslaß-Sitzventile (17, 18) in ihrer Neutralstellung befinden,
- daß jede Druckfeder (22, 23) in der Neutralstellung des Lenkventils (14) über eine axial verschiebbare Scheibe (24, 25) den Schließkörper (20, 21) des zugehörigen Einlaß-Sitzventils (15, 16) in Anlage an einem gehäusefesten Ventilsitz (26, 27) hält und
- daß bei einer Verstellung des Lenkventils (14) aus seiner Neutralstellung jeweils eines der Auslaß-Sitzventile (17, 18) die Druckfeder (22, 23) des zugehörigen Einlaß-Sitzventils (15, 16) über die Scheibe (24, 25) von dem Schließkörper (20, 21) des Einlaß-Sitzventils (15, 16) abhebt.

2. Hilfskraftlenkung nach Anspruch 1, dadurch **gekennzeichnet,** daß jedes Auslaß-Sitzventil (17, 18) einen axial verschiebbaren Ventilstößel (31, 32) aufweist, der in Neutralstellung des Lenkventils (14) mit einer Betätigungsfläche (46, 51) einen ersten Abstand (47, 52) zu der Scheibe (24, 25) hält und der mit einer Schließfläche seines Schließkörpers (35, 36) einen zweiten Abstand (48, 53) zu einem an dem Schließkörper (20, 21) des Einlaß-Sitzventils (15, 16) angeordneten Ventilsitz (28, 29) hält, wobei der zweite Abstand (48, 53) größer ist als der erste Abstand (47, 52).

## Claims

1. Servo-assisted steering system, in particular for motor vehicles, including a steering valve (14) with two inlet seat valves (15, 16) and two outlet seat valves (17, 18), the closure bodies (20, 21, 35, 36) of said seat valves being axially-movable by means of a rotating steering spindle, whereby the closure bodies (20, 21) of the inlet seat valves (15, 16) can be biased in the closure direction by the pressure spring (22, 23) force, characterized in that
- the pressure springs (22, 23) only engage the closure bodies (20, 21) of the inlet seat valves (15, 16) when the corresponding outlet seat valves (17, 18) are in their neutral position,
- when the steering valve (14) is in its neutral position, each pressure spring (22, 23) holds the closure body (20, 21) of the corresponding inlet seat valve (15, 16) pressed against a valve seat (26, 27) by means of an axially-moving disc (24, 25), with said valve seat being fixed to the housing and
- when the steering valve (14) leaves its neutral position, each outlet seat valve (17, 18) lifts the pressure spring (22, 23) of the corresponding inlet seat valve (15, 16) by means of the disc (24, 25) of the closure body (20, 21) on the inlet seat valve (15, 16).

2. Servo-assisted steering system as set forth in claim 1 characterized in that each outlet seat valve (17, 18) has an axially-moving valve tappet (31, 32) which, when the steering valve (14) is in its neutral position, holds a first distance (47, 52) from the disc (24, 25) having an actuating face (46, 51) and a second distance (48, 53) from a valve seat (28, 29) situated on the closure body (20, 21) of the inlet seat valve (15, 16) having a closing face of the closure body (35, 36), whereby the second distance (48, 53) is greater than the first distance (47, 52).

## Revendications

1. Direction assistée, notamment pour véhicules automobiles, pourvue d'un distributeur de direction (14) qui comporte deux soupapes d'entrée à siège (15, 16) et deux soupapes de sortie à siège (17, 18) dont les obturateurs (20, 21, 35, 36) peuvent coulisser en direction axiale sous l'effet d'une rotation d'un arbre de direction, les obturateurs (20, 21) des soupapes d'entrée (15, 16) étant susceptibles d'être sollicités dans le sens de fermeture par la force de ressorts d'appui (22, 23), **caractérisée** :
- en ce que les ressorts d'appui (22, 23) n'attaquent les obturateurs (20, 21) des soupapes d'entrée (15, 16) que lorsque les soupapes de sortie correspondantes (17, 18) se trouvent dans leur position neutre,
- en ce que dans la position neutre du distributeur de direction (14), chaque ressort d'appui (22, 23) maintient, par l'intermédiaire d'une rondelle coulissante axialement (24, 25), l'obturateur (20, 21) de la soupape d'entrée correspondante (15, 16) en appui contre un siège (26, 27) fixe par rapport au boîtier, et
- en ce que lors d'un mouvement du distributeur de direction (14) à partir de sa position neutre, l'une ou l'autre des soupapes de sortie (17, 18) soulève le ressort d'appui (22, 23) de la soupape d'entrée correspondante (15, 16) par l'intermédiaire de la rondelle (24, 25) par rapport à l'obturateur (20, 21) de la soupape d'entrée (15, 16).

2. Direction assistée selon la revendication 1, **caractérisée** en ce que chaque soupape de sortie (17, 18) comporte un poussoir coulissant axialement (31, 32) qui, dans la position neutre du distributeur de direction (14), présente une surface d'entraînement (46, 51) ayant un premier écart (47, 52) vis-à-vis de la rondelle (24, 25) et présente sur son obturateur (35, 36) une surface de fermeture ayant un second écart (48, 53) vis-à-vis d'un siège (28, 29) disposé sur l'obturateur (20, 21) de la soupape d'entrée (15, 16), le second écart (48, 53) étant plus grand que le premier écart (47, 52).
